# FASCICULE DE BREVET EUROPEEN

(11) **EP 1 216 611 B1**
(45) Date de publication et mention de la délivrance du brevet: **11.05.2005**
(21) Numéro de dépôt: 01440426.3
(22) Date de dépôt: 20.12.2001
(51) Int. Cl.: A01G 9/10, A01G 13/10

(54) **Dispositif de conteneur pour jeune plant**
Behältereinrichtung für Setzlinge
Container device for plantlet

(30) Priorité: 21.12.2000 FR 0016847
(43) Date de publication de la demande: 26.06.2002
(73) Titulaire: Pepinieres Guillaume, 70700 Charcenne (FR)
(72) Inventeur: Guillaume, Pierre Marie, 70700 Charcenne (FR)
(74) Mandataire: Rhein, Alain

(56) Documents cités:
- WO-A-91/15946
- FR-A- 2 715 024
- GB-A- 2 230 929
- GB-A- 2 249 704
- US-A- 6 050 027

## Description

La présente invention a pour objet un dispositif de conteneur pour jeune plant, notamment pour plant de vigne, permettant le conditionnement du plant en vue de son transport, et la protection de celui-ci lorsqu'il est en terre.

On connaît déjà des dispositifs de conteneur présentant les caractéristiques précitées à savoir permettre le conditionnement des jeunes plants en vue de leur transport, et également la protection de ceux-ci lorsqu'ils sont mis en terre.

Un tel dispositif est par exemple décrit dans le document WO 91/15946, il consiste essentiellement en un élément tubulaire comportant une extrémité conformée pour être enfoncée facilement dans la terre, destiné à contenir un plant, et comprenant deux parties, une première partie destinée à être enfoncée en terre et à protéger les racines dudit plant, et une partie destinée à rester hors de terre, apte à laisser filtrer la lumière et permettant de protéger et de soutenir le reste dudit plant.

Ce dispositif est d'une grande simplicité il présente toutefois l'inconvénient de ne pas permettre un accès direct au plant, pour le tailler par exemple. De plus, l'extrémité de l'élément tubulaire destinée à être enfoncée dans le sol est ouverte en sorte qu'il n'est pas aisé d'y maintenir le plant.

D'autres dispositifs permettent de pallier ces inconvénients, c'est le cas par exemple du dispositif décrit dans le document FR 2.715.024, qui consiste également en un élément tubulaire, lequel est obtenu par le rapprochement de deux demi-coques articulées longitudinalement entre-elles et solidarisables l'une à l'autre par l'intermédiaire de moyens de verrouillage, l'une desdites demi-coques présentant, au-dessus du niveau marquant la limite d'enfoncement dans le sol, une fente transversale qui crée en coopération avec l'articulation des demi-coques, une sorte de porte autorisant un accès au plant.

Par ailleurs son extrémité destinée à être enfoncée dans le sol comporte des dents présentant chacune deux parties faisant entre elles un coude, à savoir une partie s'étendant dans le prolongement de la paroi de l'élément tubulaire, et une partie dirigée vers l'axe de l'élément tubulaire. Les dents créent un moyen de rétention d'un plant et de sa motte, tout en permettant le passage et l'expansion des racines. La flexibilité du matériau utilisé permettant, alors que les racines sont bien ancrées dans le sol, le retrait de l'élément tubulaire.

Ce dispositif constitue un progrès par rapport aux dispositifs analogues utilisés antérieurement, il présente cependant des inconvénients notamment en ce que l'ouverture de la "porte" permettant l'accès au plant, nécessite à chaque fois de manipuler les moyens de verrouillage, ce qui engendre à la longue une détérioration desdits moyens de verrouillage, sans compter sur les difficultés que cela présente lors de l'ouverture du fait notamment que la manipulation doit être effectuée avec des gants, puisque la taille est réalisée à la fin de l'hiver.

D'autre part, lorsqu'il fait froid, la manipulation des moyens de verrouillage et d'articulation peut entraîner un endommagement desdits moyens.

D'autre part encore, ces dispositifs ne sont pas prévus pour être facilement conditionnés et transportés.

En outre, les dents doivent présenter une certaine souplesse afin de permettre l'enlèvement du dispositif après croissance du plant, or, cette souplesse peut parfois être préjudiciable à la rétention du système racinaire et de la motte dudit plant lors des opérations de transport avant mise en terre.

La présente invention a pour but de proposer un dispositif de conteneur pour jeune plant apte à protéger ce dernier lorsqu'il est mis en terre, permettant de remédier aux divers inconvénients précités.

Le dispositif de conteneur pour jeune plant selon l'invention est du type consistant en un élément tubulaire comprenant deux parties, une partie inférieure destinée à contenir les racines du plant et à être enterrée, et une partie supérieure destinée à émerger au-dessus du sol et à abriter le reste du plant, et il se caractérise essentiellement en ce que les parties inférieure et supérieure consistent en deux éléments distincts solidarisables l'un à l'autre de manière réversible, par l'intermédiaire de moyens d'assemblage.

De manière avantageuse, l'accès au plant est réalisé par enlèvement de la partie supérieure, ce qui permet notamment d'avoir accès audit plant sur tous les côtés de celui-ci.

Selon une caractéristique additionnelle du dispositif selon l'invention, les moyens d'assemblage sont du type à baïonnette.

Un tel moyen d'assemblage, nécessitant par exemple un petit angle de rotation pour réaliser la solidarisation ou la désolidarisation des deux parties, peut être aisément manoeuvré quels que soient les conditions climatiques et l'équipement vestimentaire de l'opérateur.

Selon une autre caractéristique additionnelle du dispositif selon l'invention, l'extrémité inférieure de la partie inférieure est fermée partiellement par un obturateur sécable.

Selon une autre caractéristique additionnelle du dispositif selon l'invention, la partie inférieure présente à proximité de son bord supérieur une collerette périphérique apte à marquer la limite d'enfoncement dans le sol.

Selon une autre caractéristique additionnelle du dispositif selon l'invention, il comporte extérieurement des moyens d'assujettissement permettant d'assembler côte à côte plusieurs éléments tubulaires entre eux.

Selon une autre caractéristique additionnelle du dispositif selon l'invention, les moyens d'assujettissement sont au nombre de quatre régulièrement répartis sur le pourtour de l'élément tubulaire en sorte de pouvoir solidariser à ce dernier quatre autres éléments tubulaires.

Selon une autre caractéristique additionnelle du dispositif selon l'invention, les éléments tubulaires comportent en périphérie des moyens aptes à caler lesdits éléments entre-eux lorsqu'ils sont assemblés côté à côte.

Selon un mode de réalisation particulier du dispositif selon l'invention, les moyens d'assujettissement consistent en des éléments mâles et femelles aptes à coopérer par introduction de l'un dans l'autre.

Selon une caractéristique additionnelle du mode de réalisation particulier du dispositif selon l'invention, chaque élément tubulaire comporte non loin du bord extrême supérieur de sa partie supérieure des moyens aptes à permettre la préhension de plusieurs éléments tubulaires maintenus assemblés les uns aux autres.

Les avantages et les caractéristiques du dispositif selon l'invention, ressortiront plus clairement de la description qui suit et qui se rapporte au dessin annexé, lequel en représente un mode de réalisation non limitatif.

Dans le dessin annexé :
La figure 1 représente une vue schématique en perspective et en éclaté d'un dispositif de conteneur pour jeune plant selon l'invention.
La figure 2 représente une vue schématique en élévation d'une partie du même dispositif.
La figure 3 représente une vue schématique en élévation de la même partie sous un autre angle.
La figure 4 représente une vue schématique selon l'axe XX' de la figure 3.
La figure 5 représente une vue schématique selon l'axe YY' de la figure 4.
La figure 6 représente une vue schématique en perspective d'un assemblage de plusieurs dispositifs selon l'invention.

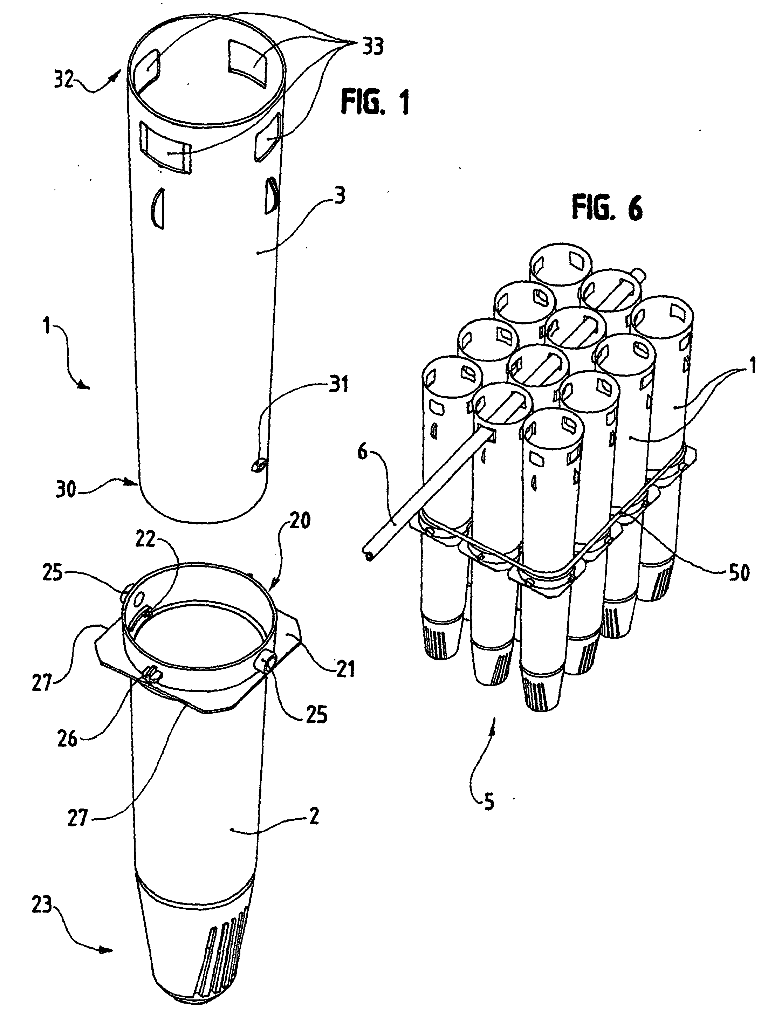

En référence à la figure 1, on peut voir qu'un dispositif de conteneur selon l'invention se présente sous la forme d'un élément tubulaire 1 réalisé par aboutement de deux parties, une partie inférieure 2 et une partie supérieure 3.

La partie inférieure 2, qui destinée à être enfoncée dans le sol, comporte extérieurement à proximité de son extrémité supérieure 20 une collerette périphérique 21 qui permet notamment de marquer la limite d'enfoncement dans le sol.

L'extrémité inférieure 30 de la partie supérieure 3 présente un diamètre extérieur inférieur à celui extérieur de l'extrémité supérieure 20 de la partie inférieure 2 en sorte de permettre un emboîtement. De plus, l'extrémité inférieure 30 comporte extérieurement deux ergots 31, dont un seul est visible sur la figure, diamétralement opposés, destinés à venir prendre place dans des logements 22, dont un seul est visible, que comporte intérieurement la partie inférieure 2 à proximité de son extrémité 20, et qui sont conformés, de manière connue en soi, en sorte de permettre un verrouillage du type baïonnette.

L'assujettissement des parties 2 et 3 est donc réalisé par introduction de l'extrémité inférieure 30 de la partie supérieure 3 dans l'extrémité supérieure 20 de la partie inférieure 2, en association avec un mouvement de pivotement, la séparation des deux parties 2 et 3 étant bien entendu obtenue en procédant de la manière inverse.

On comprendra que lorsque le dispositif selon l'invention est enfoncé dans le sol, ou plus précisément la partie inférieure 2 qui contient le système racinaire du plant, il est aisé d'en désolidariser la partie supérieure 3 pour avoir accès au plant, puis de la remettre en place.

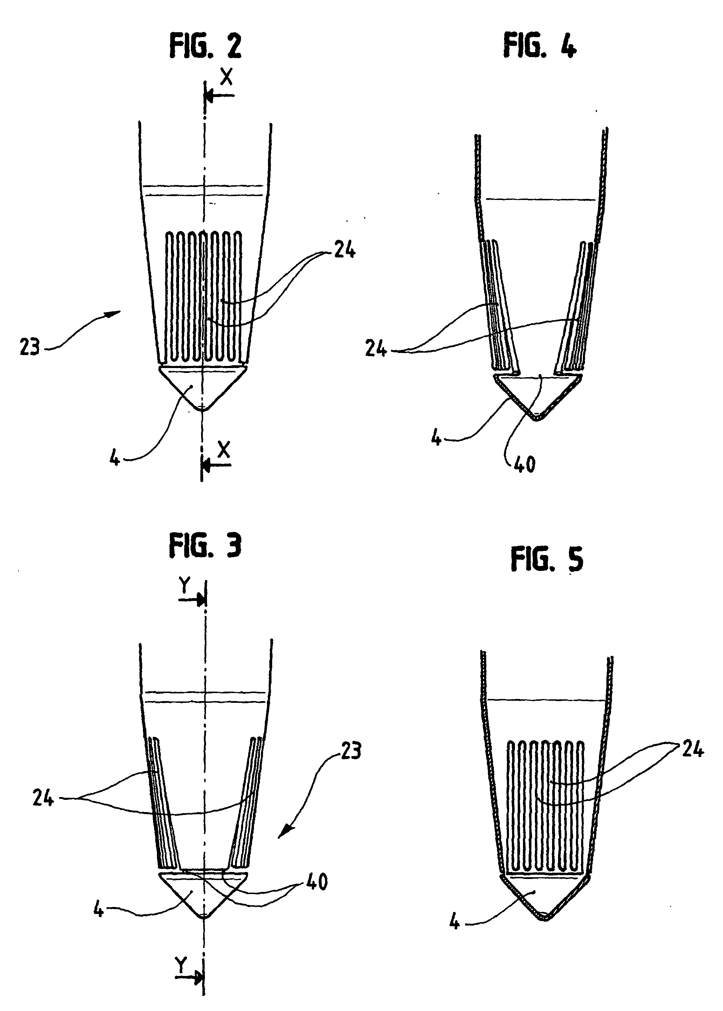

En référence maintenant aux figures 2, 3, 4 et 5 on peut voir que l'extrémité inférieure 23 de la partie inférieure 2 est ajourée latéralement en étant constituée de séries de dents 24 disposées longitudinalement, et elle est fermée partiellement par un obturateur 4.

Lorsque le dispositif selon l'invention est mis en terre, les racines du plant qu'il contient se développent et passent entre les dents 24 et entre celles-ci et l'obturateur 4.

L'obturateur 4 est de forme conique, en sorte qu'il constitue un bon moyen de rétention du système racinaire du plant et de la motte de celui-ci.

L'obturateur est relié au reste de la partie inférieure 2 par l'intermédiaire de ponts de matière 40 de faible résistance, ce qui permet, lorsque le plant a atteint une certaine taille et que son système racinaire est largement développé, l'enlèvement de la partie inférieure 2 en exerçant une traction verticale, l'ancrage dans la terre des racines du plant combinée à la traction ayant pour effet la section des ponts 40.

D'autre part, on peut voir sur la figure 1 que d'une part la collerette 21 est de forme carrée, et que d'autre part l'extrémité supérieure 20 de la partie inférieure 2 comporte, au-dessus de la collerette 21, des pièces 25 et 26 faisant saillie vers l'extérieur.

Les pièces 25 et 26 sont des moyens permettant d'assembler des éléments tubulaires 1 entre eux pour former un bloc comme celui représenté sur la figure 6. Ainsi une pièce 25 se présente sous la forme d'un élément creux tel qu'un tube d'axe radial à l'axe de l'élément 1, tandis que la pièce 26 se présente sous forme d'un élément saillant tel qu'un ergot dont le profil lui permet d'être introduit sans jeu dans une pièce 25, en l'occurrence les pièces 26 sont de section transversale en forme de croix. Une partie inférieure 2 comporte deux pièces 25 diamétralement opposées et deux pièces 26 diamétralement opposées, chacune au droit du milieu d'un des quatre côtés 27 de la collerette 31, les pièces 25 et 26 étant d'une longueur supérieure à la largeur de cette dernière. Ainsi, en combinant la juxtaposition des collerettes 31 dont les côtés 27 viennent se placer bord à bord pour réaliser le calage des éléments 1, et l'introduction des pièces 26 dans les pièces 25, on obtient un bloc 5 tel que celui représenté sur la figure 6.

On notera que l'assemblage des éléments 1 en un bloc 5 peut être complété par un cerclage au moyen d'un feuillard 50.

Par ailleurs, on peut voir sur les figures 1 et 6 que les parties supérieures 3 des éléments 1 comportent chacune à proximité de leur extrémité supérieure 32 quatre lumières 33 régulièrement réparties sur le pourtour de celle-ci, chacune au droit d'une pièce 25 ou 26, en sorte que lors de la constitution d'un bloc 5 les lumières 33 des différents éléments 1 soient alignées, créant ainsi plusieurs passages qui traversent le bloc 5, un passage central permettant de porter l'ensemble du bloc 5 par introduction dans ces lumières 33 d'une barre ou analogue 6.

Le dispositif selon l'invention présente de nombreux avantages, outre les facilités de transport et de mise en oeuvre, il permet un accès au plant par une manoeuvre simple et facile à réaliser, et ceci quelles que soient les conditions météorologiques.

On notera par ailleurs qu'il est possible de réutiliser la partie supérieure 3 d'un élément 1.

## Revendications

1. Dispositif de conteneur pour jeune plant, du type consistant en un élément tubulaire (1) comprenant deux parties, une partie inférieure (2) destinée à contenir les racines du plant et à être enterrée, et une partie supérieure (3) destinée à émerger au-dessus du sol et à abriter le reste du plant, **caractérisé en ce que** les parties inférieure et supérieure (2, 3) consistent en deux éléments distincts solidarisables l'un à l'autre de manière réversible par l'intermédiaire de moyens d'assemblage (31, 22).

2. Dispositif selon la revendication 1, caractérisé en ce les moyens d'assemblage (31, 22) sont du type à baïonnette.

3. Dispositif selon la revendication 1 ou la revendication 2, **caractérisé en ce que** l'extrémité inférieure (23) de la partie inférieure (2) est fermée partiellement par un obturateur sécable (4).

4. Dispositif selon l'une quelconque des revendications précédentes, **caractérisé en ce que** la partie inférieure (2) présente à proximité de son bord supérieur une collerette périphérique (21) apte à marquer la limite d'enfoncement dans le sol.

5. Dispositif selon l'une quelconque des revendications précédentes, **caractérisé en ce qu'**il comporte extérieurement des moyens d'assujettissement (25, 26) permettant d'assembler côte à côte plusieurs éléments tubulaires (1) entre eux.

6. Dispositif selon la revendication 5, **caractérisé en ce que** les moyens d'assujettissement (25, 26) sont au nombre de quatre régulièrement répartis sur le pourtour de l'élément tubulaire (1) en sorte de pouvoir solidariser à ce dernier quatre autres éléments tubulaires (1).

7. Dispositif selon la revendication 5 ou la revendication 6, **caractérisé en ce que** les éléments tubulaires (1) comportent en périphérie des moyens (27) aptes à caler lesdits éléments (1) entre-eux lorsqu'ils sont assemblés côté à côte.

8. Dispositif selon l'une quelconque des revendications 5 à 7, **caractérisé en ce que** les moyens d'assujettissement consistent en des éléments mâles (26) et femelles (25) aptes à coopérer par introduction de l'un dans l'autre.

9. Dispositif selon l'une quelconque des revendications 5 à 8, **caractérisé en ce que** chaque élément tubulaire (1) comporte non loin du bord extrême supérieur (32) de sa partie supérieure (3) des moyens (33) aptes à permettre la préhension de plusieurs éléments tubulaires (1) maintenus assemblés les uns aux autres.

## Patentansprüche

1. Behältervorrichtung für jungen Setzling der Art bestehend aus einem röhrenförmigen Element (1), umfassend zwei Teile, einen unteren Teil (2), vorgesehen, um die Wurzeln des Setzlings zu enthalten und eingegraben zu werden, und einen oberen Teil (3), vorgesehen, über dem Boden zu ragen und den Rest des Setzlings zu schützen, **dadurch gekennzeichnet, daß** die unteren und oberen Teile (2, 3) aus zwei unterschiedlichen Elementen bestehen, die miteinander über Zusammenfügungsmittel (31, 22) auf umkehrbare Art und Weise verbunden werden können.

2. Vorrichtung nach Anspruch 1, **dadurch gekennzeichnet, daß** die Zusammenfügungsmittel (31, 22) der Art Bajonett sind.

3. Vorrichtung nach Anspruch 1 oder Anspruch 2, **dadurch gekennzeichnet, daß** das untere Ende (23) des unteren Teiles (2) teilweise durch einen abbrechbaren Verschluß (4) verschlossen ist.

4. Vorrichtung nach irgendeinem der vorgehenden Ansprüche, **dadurch gekennzeichnet, daß** der untere Teil (2) nahe bei seinem oberen Rand einen peripherischen Kragen (21) aufweist, geeignet, um die Senkgrenze im Boden zu markieren.

5. Vorrichtung nach irgendeinem der vorgehenden Ansprüche, **dadurch gekennzeichnet, daß** sie äußerlich Befestigungsmittel (25, 26) umfaßt, erlaubend, mehrere röhrenförmige Elemente (1) Seite an Seite zusammenzufügen.

6. Vorrichtung nach Anspruch 5, **dadurch gekennzeichnet, daß** die Befestigungsmittel (25, 26) vier an der Zahl sind, regelmäßig verteilt auf dem Umfang des röhrenförmigen Elements (1), derart, um an diesem letzteren vier weitere röhrenförmige Elemente (1) fest verbinden zu können.

7. Vorrichtung nach Anspruch 5 oder Anspruch 6, **dadurch gekennzeichnet, daß** die röhrenförmigen Elemente (1) auf dem Umkreis Mittel (27) umfassen, geeignet, die besagten Elemente (1) untereinander festzulegen, wenn sie Seite an Seite zusammengefügt sind.

8. Vorrichtung nach irgendeinem der Ansprüche 5 bis 7, **dadurch gekennzeichnet, daß** die Befestigungsmittel aus Elementen der Art männlich (26) und weiblich (25) bestehen, geeignet, durch Einführung ineinander zusammenzuwirken.

9. Vorrichtung nach irgendeinem der Ansprüche 5 bis 8, **dadurch gekennzeichnet, daß** jedes röhrenförmige Element (1) unweit vom oberen äußeren Rand (32) seines oberen Teiles (3) Mittel (33) umfaßt, geeignet, um das Ergreifen von mehreren röhrenförmigen, miteinander zusammengefügt gehalten Elementen (1) zu erlauben.

## Claims

1. Container device for young seedling, of the type consisting of a tubular element (1) comprising two portions, a lower portion (2) aimed at containing the roots of the seedling and of being buried, and an upper portion (3) aimed at emerging above ground-level and at accommodating the rest of the seedling, **characterised in that** the lower and upper portions (2, 3) consist of two different elements which can be made integral with each other in a reversible way through assembling means (31, 22).

2. Device according to claim 1, **characterised in that** the assembling means (31, 22) are of the bayonet type.

3. Device according to claim 1 or claim 2, **characterised in that** the lower end (23) of the lower portion (2) is partially closed by a shearable obturator (4).

4. Device according to any of the preceding claims, **characterised in that** the lower portion (2) has, close to its upper edge a peripheral collar (21) capable of marking the limit of insertion into the ground.

5. Device according to any of the preceding claims, **characterised in that** it includes externally fastening means (25, 26) allowing to assemble to each other, side by side, several tubular elements (1).

6. Device according to claim 5, **characterised in that** the fastening means (25, 26) are four in total, regularly distributed over the circumference of the tubular element (1), so as to be able to make integral with the latter four other tubular elements (1).

7. Device according to claim 5 or claim 6, **characterised in that** the tubular elements (1) include on their periphery means (27) capable of immobilising said elements (1) with respect to each other when they are assembled side by side.

8. Device according to any of claims 5 to 7, **characterised in that** the fastening means consist of male (26) and female (25) elements capable of co-operating through insertion into each other.

9. Device according to any of claims 5 has 8, **characterised in that** each tubular element (1) includes, not far from the uppermost edge (32) of its upper portion (3) means (33) capable of allowing seizing several tubular elements (1) maintained assembled to each other.
